Europäisches Patentamt

European Patent Office

Office européen des brevets

(11) Publication number: **0 285 269**
**A1**

## EUROPEAN PATENT APPLICATION

(21) Application number: 88301933.3

(22) Date of filing: 04.03.88

(51) Int. Cl.⁴ **F16B 17/00**

(30) Priority: 01.04.87 US 32640

(43) Date of publication of application:
05.10.88 Bulletin 88/40

(84) Designated Contracting States:
**DE ES GB**

(71) Applicant: **GENERAL MOTORS CORPORATION**
**General Motors Building 3044 West Grand**
**Boulevard**
**Detroit Michigan 48202(US)**

(72) Inventor: **Tarum, Carl D.**
**5697 Lessandro**
**Saginawa Michigan 48603(US)**
Inventor: **Cook, D. Craig**
**9125 Ronrick Place N.**
**Frankenmuth Michigan 48734(US)**

(74) Representative: **Breakwell, John Neil Bower et**
**al**
**GM Patent Section Vauxhall Motors Limited**
**Luton Office (F6) P.O. Box No. 3 Kimpton**
**Road**
**Luton Bedfordshire LU2 OSY(GB)**

(54) Self-crimping connection for inner and outer members and method of assembling the same.

(57) A self-crimping connection for inner and other members and a method of making the same includes providing the inner member (1) with stepped cylindrical exterior walls defining an outboard wall (12) of reduced diameter relative to an inboard wall (11), with an annular groove (17) being formed in the outboard wall; providing the outer member (4) with a stepped bore defining an internal outboard wall (21) and an inboard wall (22) to slidably receive the outboard and inboard walls respectively of the inner member, with an annular groove (25) being formed in the outboard wall of the outer member; and providing a first bushing (2) encircling the outboard wall of the inner member and a second bushing (3) extending circumferentially within the outboard wall of the outer member, with each of the first and second bushings having a body portion (30) and a crimp collar portion (31), in an arrangement such that as the inner member and the associated first bushing are axially pressed into the outer member and its associated second bushing, the crimp collar portion of the first bushing is crimped into locking engagement in the annular groove in the outboard wall of the outer member, and the crimp collar portion of the second bushing is crimped into locking engagement in the annular groove in the inner member, to thereby prevent relative axial movement of the inner and outer members.

Preferably one of the walls is also knurled so as to also prevent relative rotation of the inner and outer members.

Fig. 1

# SELF-CRIMPING CONNECTION FOR INNER AND OUTER MEMBERS AND METHOD OF ASSEMBLING THE SAME

This invention relates to a self-crimping connection for inner and outer members, which for example may be in the form of tubular members or parts of various machine elements, and to a method of assembling the same.

Various arrangements have been used in the prior art to secure together cylindrical inner and outer members, for example. Thus, cylindrical inner and outer members have been axially secured together by the use of retaining rings, both external and internal, or by injecting a plastics material into radially aligned grooves in the respective members, or by the use of screw-type fasteners extending through the outer member so as to engage the inner member.

The present invention is concerned with the securement of an inner member and an outer member together by means of a self-crimping connection.

To this end the present invention provides a self-crimping connection for inner and outer members comprising the combination of features specified in claim 1.

In addition, a wall of at least one of the members can be provided with a knurled surface arranged to prevent relative rotation of the inner and outer members.

The invention also provides a method of assembling an inner member to an outer member by means of a self-crimping connection, comprising the steps specified in claim 4.

In the drawings:

Figure 1 is an exploded view of elements for effecting the self-crimping connection of an inner member to an outer member by means of two bushing members, in accordance with a first embodiment of the invention;

Figure 2 is a fragmentary longitudinal sectional view illustrating a stage in the assembly of the elements of Figure 1 prior to the self-crimping connection being effected, only the right-hand portion of the sectional view being shown;

Figure 3 is a view similar to Figure 2 but showing the inner and outer members axially connected together by the self-crimping connection;

Figure 4 is an enlarged fragmentary elevational view showing a portion of one of the self-crimping bushings in the structures shown in Figures 1 to 3;

Figures 5 and 6 are views similar to Figures 2 and 3 respectively, but showing a second embodiment of the subject self-crimping connection for cylindrical inner and outer members;

Figures 7 to 11 are views similar to Figures 3 and 6, but showing still further alternative embodiments of self-crimping connections for inner and outer members;

Figure 12 is an exploded view, similar to Figure 1, of an alternative embodiment of a self-crimping connection for tubular inner and outer members in a tube coupling structure to effect both axial and rotative retention of these members relative to one another;

Figure 13 is a fragmentary longitudinal sectional view, with parts in elevation, showing the elements of Figure 12 in an assembled position; and

Figure 14 is a fragmentary longitudinal sectional view, with parts in elevation, of a further embodiment of a self-crimping connection for tubular inner and outer members, similar to that of Figure 13 but applied to a different form of tube coupling structure.

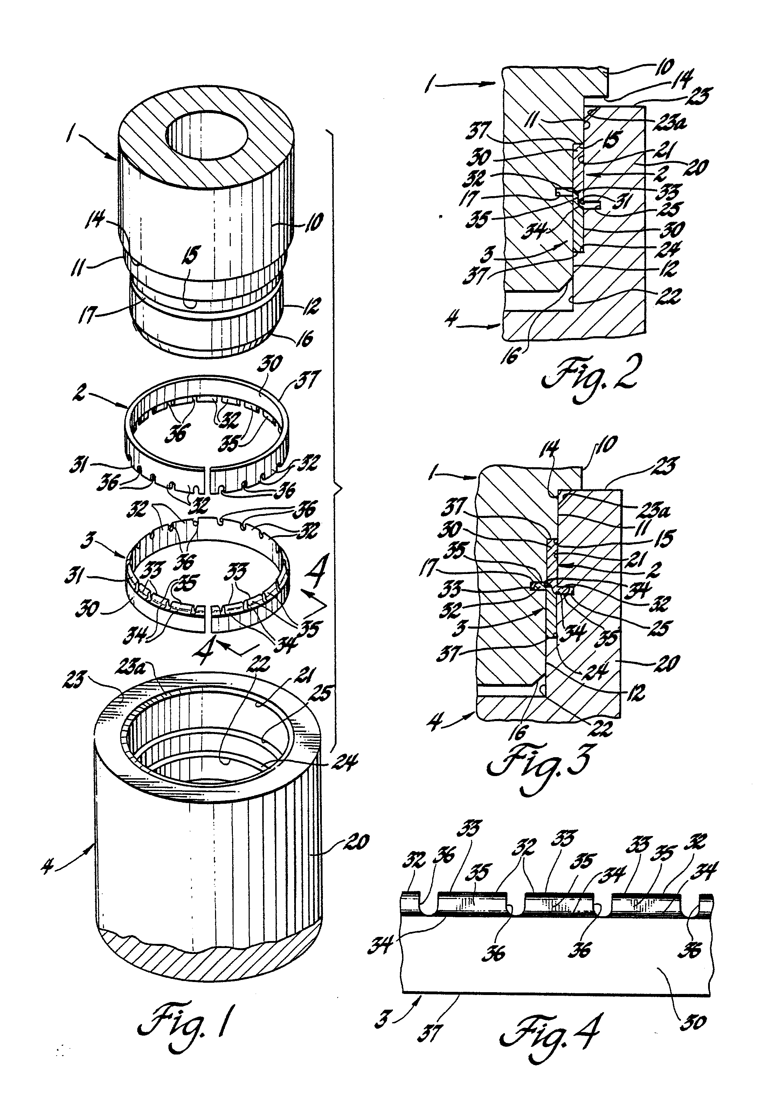

With reference first to Figures 1 to 4 of the drawings, the elements are shown for a self-crimping connection of cylindrical inner and outer members which, as is best seen in Figure 1, basically includes four parts comprising an inner member generally designated 1, a first bushing 2, a second bushing 3 and an outer member generally designated 4.

The inner member 1 includes a main body portion 10 which, although being shown as cylindrical, can be of any desired hollow or solid configuration, and terminates adjacent its lower end, as viewed in Figures 1 to 3, in a stepped cylindrical configuration so as to define a circular inboard, upper wall 11 and an outboard, lower wall 12 of reduced external diameter relative to that of the upper wall 11, the descriptive terms for these walls being used in particular with reference to Figure 1. The upper wall 11 is connected to the main body portion 10 by means of a flat (radial) shoulder 14, and the walls 11 and 12 are interconnected by means of a flat (radial) shoulder 15. Preferably, as shown, the free, lower end of the wall 12 is provided with a chamfered edge 16.

In the construction as shown in Figures 1 to 3, the lower wall 12 is provided intermediate its ends with a slot-like annular groove 17 extending radially inwardly at right angles to the central axis of the walls 11 and 12. This slot-like groove 17 is of a predetermined width, and is located a predetermined axial extent down from the flat shoulder 15, for a purpose to be described.

The outer member 4 includes a main body portion 20 which, although also being shown as cylindrical, could be of any desired hollow or solid configuration, and is provided at its free, upper end, as viewed in Figures 1 to 3, with a stepped bore that defines an outboard, upper wall 21 and an inboard, lower wall 22 of smaller internal diameter than the upper wall 21.

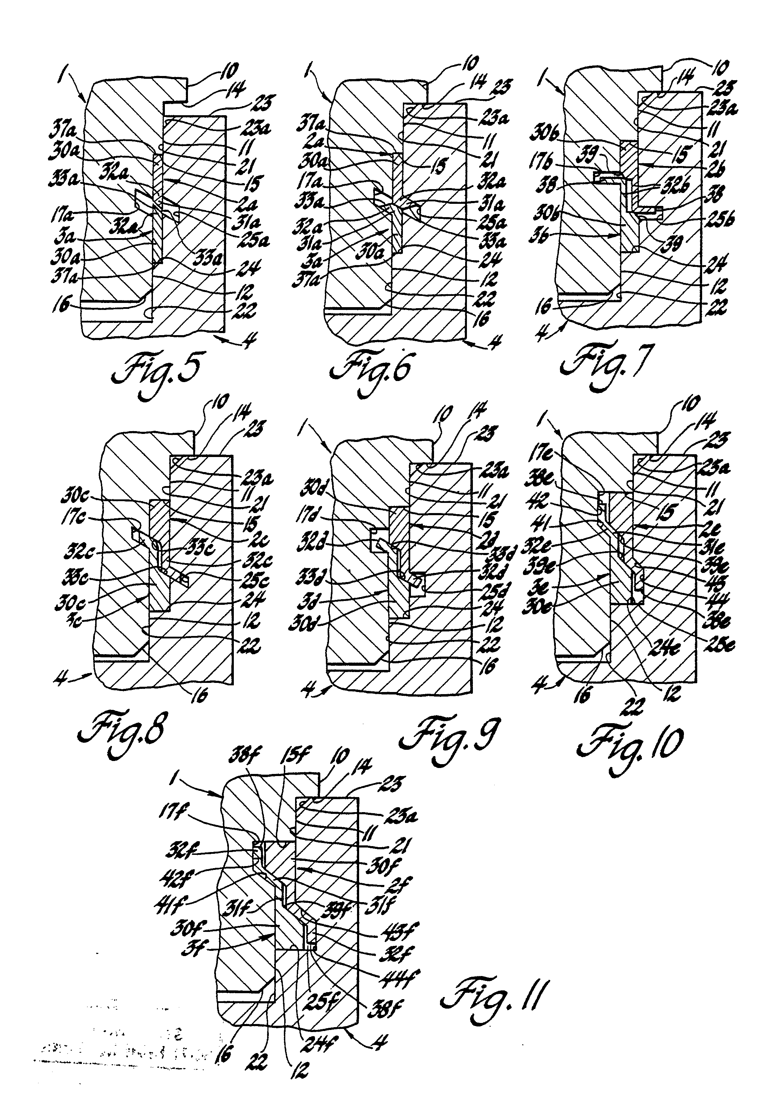

As is best seen in Figures 2 and 3, the upper wall 21 of the outer member 4 is sized so as to slidably receive the upper wall 11 of the inner member 1, and the lower wall 22 of the outer member 4 is sized so as to slidably receive the lower wall 12 of the inner member 1. Also as shown, the upper wall 21 is connected at its upper end to a flat (radial) shoulder 23 forming an annular end face of the outer member 4 via a chamfered inner edge 23a, and is connected at its lower end to the lower wall 22 by means of a flat (radial) shoulder 24. In this embodiment, the upper wall 21 is also provided with a slot-like annular groove 25 similar to the slot-like groove 17, with the groove 25 being located a predetermined axial extent from the flat shoulder 24.

In addition, and as is best seen in Figures 2 and 3, when the inner member 1 is inserted into the outer member 4 the lower wall 12 of the inner member 1 defines with the upper wall 21 of the outer member 4 an annulus cavity (not referenced) that is disposed between the flat shoulders 15 and 24 of the inner member 1 and outer member 4 respectively, and is sized to receive the first and second bushings 2 and 3 in a manner to be described.

With reference now to the first and second bushings 2 and 3 respectively, each can be formed as a solid ring, or as shown in Figure 1 each can be in the form of a split ring for ease of manufacturing, for a reason to become apparent. As can best be seen from Figures 1 and 4, the first and second bushings 2 and 3 as formed each include a body portion 30 having internal and external diameters such that it will be slidably received in the annulus cavity, and a crimp collar portion 31. The second bushing 3, as is best seen in Figures 1 and 4, is provided with a plurality of circumferentially spaced-apart crimp portions 32, one side surface of these crimp portions being coterminous with the inner wall of the body portion 30, as shown in Figure 1. As shown, the crimp collar portion 31 and thus the crimp portions 32 are of reduced radial thickness equal to slightly less than one-half the radial thickness of the associated body portion 30. In this embodiment, notches or slots 36 are provided between adjacent sets of the crimp portions 32, with the angular extent of the crimp portions 32 being substantially larger than that of the notches 36, which may alternatively take the form of saw kerfs 36a as shown in Figure 12, so that angular alignment of the crimp portions 32 on the first and second bushings 2 and 3 is not required.

In the embodiment of Figures 1 to 4, each of the crimp portions 32 as originally formed, as is best seen in Figure 2, is of S-shaped configuration as viewed in cross-section, with an outboard, leading curved cam portion 33 and an inboard, trailing curved cam portion 34. As is best seen in Figure 2, each of the curved cam portions 33 and 34 is of a predetermined radius, and these cam portions are interconnected by a flat straight surface 35 that is parallel to the straight side of the associated bushing 3.

The first bushing 2 is of similar construction to the second bushing 3, as described. except that the flat side surface of its crimp portions 32 is coterminous with the outer wall of its associated body portion 30, as is best seen in Figure 1. With the bushings 2 and 3 formed as split rings, each can be initially formed of flat stock material, and then rolled as required to form either the first bushing or the second bushing 3.

During initial assembly, the second bushing 3 is positioned in the outer member 4 so as to be loosely positioned in the upper wall 21 with the flat shoulder formed by the end face 37 of its body 30 in abutment against the flat shoulder 24, and with its crimp portions 32 extending axially upwardly. The first bushing 2 can be mounted similarly but with its crimp portion 32 extending axially downwardly for engagement with the crimp portions 32 of the second bushing 3. The inner member 1 is then inserted into the outer member 4 such that its lower wall 12 extends through the first and second bushings 2 and 3 respectively, with its flat shoulder 15 engaging the flat shoulder 37 of the first bushing 2, this being the position shown in Figure 2.

Thereafter an axial force is applied so that, in effect, the inner member 1 is pressed into the outer member 4, thereby deforming the first and second bushings 2 and 3 respectively, as will now be described.

The first bushing 2, being contained by portions of the inner and outer members 1 and 4 respectively, is prevented from moving downwardly, as viewed in Figures 2 and 3, by the second bushing 3. This causes the crimp portions 32 to deform into the slot-like groove 25 in the outer member 4 so that its cam portions 33 and a portion of its flat surface 35 extend radially into this groove 25, as a result of its cam portion 33 engaging the cam portions 34 of the second bushing 3.

Simultaneously the second bushing 3. which is also contained by the inner and outer members 1 and 4 respectively, has its crimp portions 32 deformed, in a similar manner to that described above in relation to the first bushing 2, into the slot-like groove 17 in the inner member 1.

The self-crimping connection is thus completed, as is shown in Figure 3, with a portion of the first bushing 2 deformed into the outer member 4 and a portion of the second bushing 3 deformed into the inner member 1, as described hereinabove, and with the originally flat surfaces 35 of the respective bushings 2 and 3 in engagement with one another. The inner and outer members 1 and 4 are thereby interconnected by means of a geometrical interlock that is formed by the first and second bushings 2 and 3 and is effective to prevent relative axial movement of the inner and outer members. As is shown in Figure 3, the spacing of the slot-like grooves 27 and 25 and the dimensions of the first and second bushings 2 and 3 respectively are selected so that in the final assembled position the shoulder 14 of the inner member 1 abuts the shoulder 23 of the outer member 4.

To axially pull apart the inner member 1 and the outer member 4, it would be necessary to apply an axial force that was large enough to shear of the respective crimp portions 32 of the first and second bushings 2 and 3 respectively where they are deformed into the respective slot-like grooves 25 and 17.

By appropriate selection of the material and the cam geometry of the bushings, the forces required for disassembly can be made to exceed the assembly forces used to create the self-crimping connection.

With reference now to Figures 5 and 6, there is shown an alternative embodiment of a self-crimping connection in accordance with the invention, wherein similar parts are designated by like reference numerals but with the addition of a suffix (a) where appropriate.

In this alternative embodiment, the walls 12 and 21 of the inner member 1 and the outer member 4 respectively have their respective slot-like grooves 17a and 25a each inclined at an angle to the surfaces of these walls. In addition, the first and second bushings 2a and 3a respectively have their respective body portion 30a and crimp collar portion 31a, as formed, of equal widths, and the crimp portion 32a of each is merely provided with a flat, inclined cam portion 33a at its associated outboard, free end, as is best seen in Figure 5.

Accordingly, as the inner member 1 is forced axially relative to the outer member 4, from the position shown in Figure 5 to the position shown in Figure 6, the cam portions 33a will interengage so as to crimp the crimp portions 32a of the first bushing 2a into engagement in the slot-like groove 25a of the outer member 4 and at the same time to crimp the crimp portions 32a of the second bushing 2a into engagement in the slot-like groove 17a of the inner member 1.

Further alternative embodiments of self-crimping connections in accordance with the invention are shown in Figures 7, 8, 9, 10 and 11, wherein similar parts are also designated by like reference numerals but with the addition of a suffix (b, c, d, e and f respectively) where appropriate, and showing the inner and outer members 1 and 4 respectively connected together by the respective self-crimping connections.

With reference first to Figure 7, in this embodiment each of the first and second bushings 2b and 3b respectively includes a body portion 30b and a straight, as formed, crimp collar portion having circumferentially spaced-apart crimp portions 32b each of which terminates at its free end in a flat end surface 38 so as to engage an inclined flat chamfered cam surface 39 formed on the associated body portion 30b on the side opposite the associated crimp portions 32b. Thus as shown, as the inner member 1 and the outer member 4 are axially forced together into the position shown, a portion of each of the crimp portions 32b of the second bushing 3b is forced into locking engagement in the groove 17b of the inner member 1, and a portion of the crimp portions 32b of the first bushing 2b is forced into locking engagement in the slot-like groove 25b of the outer member 4. In this embodiment, as shown, the thicknesses of the crimp portions 32b are substantially less than one-half the thickness of the body portion 30b in each of the first and second bushings 2b and 3b respectively.

In the self-crimping connection embodiment shown in Figure 8, slot-like annular grooves 17c and 25c in the inner member 1 and the outer member 4 respectively are inclined at an angle relative to the surfaces 12 and 21, and are of a predetermined width so as to slidably receive the leading-end crimp portions 32c of the first and second bushings 2c and 3c respectively. As shown, each of the first and second bushings 2c and 3c has a curved cam portion 33c formed as an interconnection between the crimp portions 32c and the associated body portion 30c.

The self-crimping connection embodiment shown in Figure 9 uses first and second bushings 2d and 3d that are similar to those described above in relation to the Figure 8 embodiment except that in the Figure 9 embodiment their leading-end crimp portions 32d are adapted to be crimped into relatively wide right-angle annular grooves 17d and 25d in the surfaces 12 and 21 respectively of the inner and outer members 1 and 4 respectively, so that the crimped portions extending into the respective grooves 17d and 25d merely engage the corner edges defined by the wall 12 and a wall of the groove 17d or the wall 21 and a wall defining part of the groove 25d.

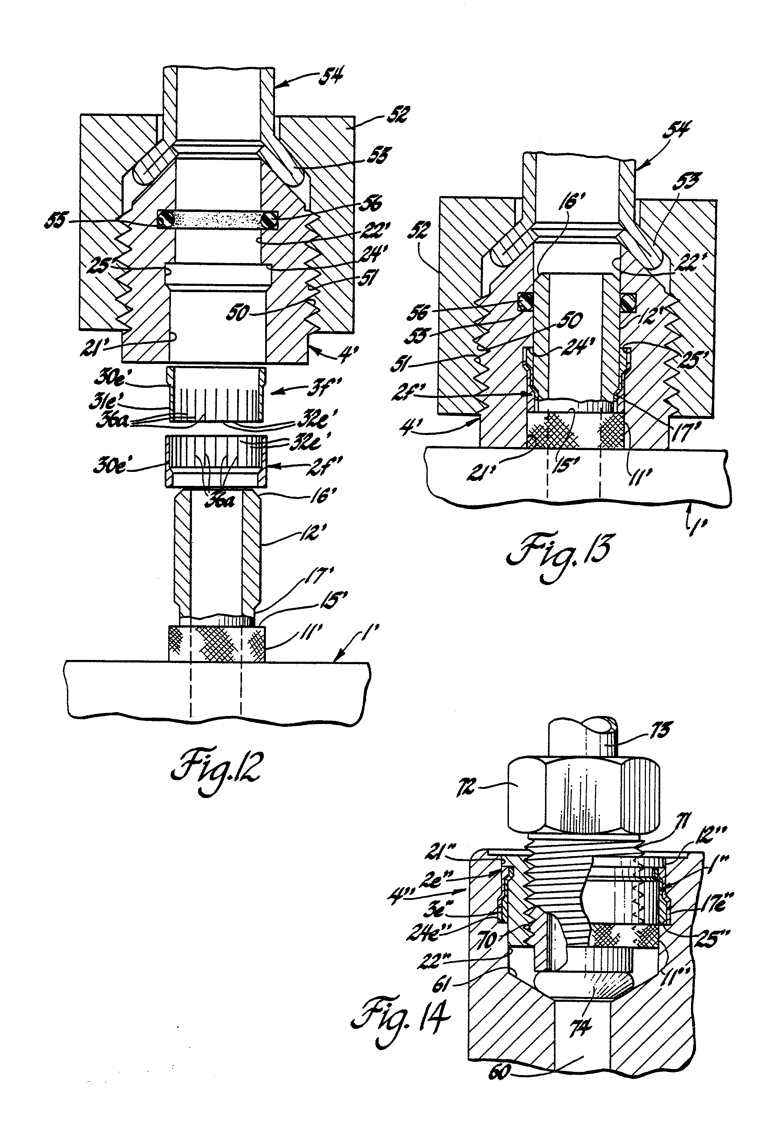

With reference now to the self-crimping connection embodiment shown in Figure 10, the groove 17e in the wall 12 of the inner member 1 is defined on one side by a cam shoulder surface 41 formed at an obtuse angle to the wall 12 to terminate at a base surface 42, and the opposite side of the groove 17e is defined by part of the shoulder 15e, which extends radially inwardly to connect with the base surface 42. The groove 25e in the wall 21 of the outer member 4 is of similar configuration, so as to include an inclined cam shoulder surface 43, a base surface 44 and a portion of the shoulder 24e.

In this Figure 10 embodiment, each of the first and second bushings 2e and 3e respectively has a body portion 30e which is of a lesser axial extent than that of its, as formed, associated straight crimp collar portion having circumferentially spaced-apart crimp portions 32e each of which terminates at its free end in a flat end surface 38e. As shown, each body portion 30e is provided at its inboard end with an inclined flat chamfered cam surface 39e that is connected to the associated adjacent surface of the crimp collar portion 31e, this cam surface 39e having an angle that is formed complementary to those of the associated cam shoulder surfaces 41 or 43.

Thus, during a crimping operation, as the inner member 1 and the outer member 4 are forced axially together to the position shown in Figure 10, the end surface 38e of a crimp portion 32e of the second bushing 3e engages the cam surface 39e of the first bushing 2e and is forced radially inwardly and guided by this cam surface 39e and the shouldered surface 41 into engagement with the base surface 42, which then causes a portion of the free end of this crimp portion 32e to be further crimped so as to extend substantially parallel to the base surface 42. As is shown in Figure 10, the crimp portions 32e of the first bushing 2e will thus be deformed, that is, crimped, in a similar manner to that described in relation to the second bushing 3e; it accordingly does not seem necessary to further describe the crimping of the crimp portions 32e of the first bushing 2e.

With reference now to the self-crimping connection shown in Figure 11, in this embodiment, which is similar to the embodiment shown in Figure 10, the first and second bushings 2f and 3f are made in the form of split rings with a sufficient gap between the free ends of the second bushing 3f, for a purpose to be described.

In a manner similar to that in the previously described Figure 10 embodiment, in the Figure 11 embodiment the groove 17f in the wall 12 of the inner member 1 is defined on one side by a cam shoulder surface 41f formed at an obtuse angle, and the opposite side of the groove 17f is defined by part of the shoulder 15f which extends radially inwardly to connect with the base surface 42f. The groove 25f in the wall 21 of the outer member 4 is of similar configuration, so as to include an inclined cam shoulder surface 43f, a base surface 44f and a portion of the shoulder 24f.

In this Figure 11 embodiment, each of the first and second bushings 2f and 3f respectively has a body portion 30f which is of a lesser axial extent than that of its, as formed, associated crimp collar portion having the circumferentially spaced-apart crimp portions 32f, each of which terminates at its free end in a flat end surface 38f. As shown, each body portion at its inboard end is provided with an inclined flat chamfered cam surface 39f that is connected to the associated adjacent surface of the crimp collar portion 31f. This cam surface 39f has an angle that is formed complementary to those of the associated shoulder surfaces 41f and 43f on the inner member 1 and the outer member 4 respectively.

Also in this Figure 11 embodiment, since the first and second bushings 2f and 3f are in the form of split rings, the body portion 30f of the first bushing 2f, as formed, has an external diameter so as to be slidably received by the upper wall 21 of the outer member 4, but it has an internal diameter that is less than the external diameter of the lower wall 12 of the inner member 1. In a similar manner, the body portion 30f of the second bushing 3f, as formed, has an internal diameter so as to be slidably received by the lower wall 12 of the inner member 1, and an external diameter that is greater than that of the internal diameter of the wall 21 of the outer member 4.

Accordingly, in this embodiment, prior to assembly of the inner member 1 into the outer member 4, the first bushing 2f must be expanded radially outwardly so that it can slide axially over the lower wall 12 of the inner member 1 to a position at which it can be released so that the body portion 30f thereof can contract into the groove 17f in the inner member 1 to the position shown in Figure 11. Thus the second bushing 3f must be compressed radially inwardly so that it can slide axially within the upper wall 21 of the outer member 4 to a position at which it can be released so that the body portion 30f thereof can expand outwardly into the groove 25f in the outer member 4, to the position shown in Figure 11.

The inner member 1 with the first bushing 2f thus attached thereto can be inserted into the outer member 4 with the second bushing 3f previously inserted therein. Thereafter, the self-crimping connection of the inner member 1 and outer member 4 can be obtained in the same manner as described above in relation to the Figure 10 embodiment.

An alternative embodiment of a self-crimping connection of tubular inner and outer members in accordance with the invention as applied to a tube coupling structure to effect both axial and rotative retention of these members relative to each other is shown in Figures 12 and 13, wherein similar parts are designated by like reference numerals, but with the addition of a suitable suffix, in the form of a prime (') or double-prime (") superscript, as applicable.

In the alternative embodiment shown in Figures 12 and 13, the inner member 1' is in the form of a machine element having a tubular boss extending a predetermined amount outwardly from the main body portion thereof, and it is provided with a circular inboard wall 11' and an outboard wall 12' of reduced external diameter relative to the inboard wall 11', the outboard wall 12' having an annular groove 17' therein adjacent the interconnecting shoulder 15'. At its free end the outboard wall 12' is connected to the free end surface by means of a chamfered edge 16.'. In addition, in the construction shown in Figures 12 and 13 at least the outer peripheral surface of the inboard wall 11' is knurled, as shown by the cross-hatching of this wall 11'.

In this construction, the outer member 4' is in the form of a tubular fluid line adapter having external threads 50 for threaded engagement with the internal threads 51 of an inverted flare nut 52, with these elements being configured in a manner well known in the tube coupling art to sealingly engage the flared end 53 of a tube generally designated 54.

In the construction shown, the outer member 4' is provided with a through bore defining a circular internal outboard wall 21' and an inboard wall 22' complementarily sized relative to the walls 11' and 12' respectively of the inner members 1' so as to slidably receive these walls. The wall 21' is provided with an annular groove 25' one side of which is defined by a portion of a shoulder 24'. In addition the inboard wall 22' is provided with an annular groove 55, axially spaced from the groove 25' to receive an O-ring seal 56.

In the construction shown in Figures 12 and 13, the grooves 17' and 25' in the inner and outer members 1' and 4' and the first and second bushings 2f' and 3f' are structurally and functionally the same as the corresponding elements described and illustrated in relation to the Figure 10 embodiment, and thus it does not appear necessary to repeat the description of these elements. However, in this embodiment the outboard wall 12' of the inner member 1' is of a suitable axial extent to sealingly engage the O-ring seal, and also the adjacent crimp portions 32e' on the first and second bushings 2f' and 3f' are separated by slots in the form of saw kerfs 36a, as is best seen in Figure 12.

However, as is shown in Figure 13, when the self-crimping connection is made, the knurled surface of the inboard wall 11' of the inner member 1' will frictionally engage the wall 21' of the outer member 4' so as to prevent relative rotation of these elements, so that an operator can uncouple or re-couple the inverted flare nut 52.

A further embodiment of a self-crimping connection of inner and outer members in accordance with the invention as applied to another form of tube coupling structure to effect both axial and rotative retention of these members relative to each other is shown in Figure 14, wherein similar parts are designated by like reference numerals, but with the addition of a suitable suffix, as applicable.

In the construction shown in Figure 14, the outer member 4" is in the form of a machine element such as a gear housing with a stepped bore therein defining a circular internal outboard wall 21", and an inboard wall 22" of reduced internal diameter relative to the wall 21", with the wall 22" being connected to a fluid passage 60 by means of an inclined seal shoulder 61. As in the Figure 10, 12 and 13 structures, the outboard wall 21" is provided with an annular groove 25" and an abutment shoulder 24e".

In this construction, the inner member 1" is in the form of a tubular insert provided with internal threads 70 to threadedly receive the external threads 71 of a hexagon-headed tube fitting 72 encircling the body of a tube 73 having a raised annular head 74 at one end thereof which is adapted to be sealingly sandwiched between the seal shoulder 61 in the outer member 4" and the end face of the hexagon-headed tube fitting 72 in a manner well known in the tube coupling art.

As is shown in Figure 14, the inner member 1" is provided with a circular inboard, upper wall 12" and an outboard, lower wall 11" of a smaller external diameter than the wall 12", and the wall 1.1" has an annular groove 17e" similar to that described and shown with reference to the Figure 10 embodiment. In addition, at least the lower end of the wall 11", as viewed in Figure 14, is provided with a knurled surface, as shown by the cross-hatching to the right-hand side of this Figure.

The first and second bushings 2e" and 3e" in this Figure 14 embodiment are structurally and functionally similar to the corresponding elements described and illustrated in relation to the Figure 10 embodiment and also to those in the Figures 12 and 13 embodiment, and accordingly it does not seem necessary to further describe these elements and how they are self-crimped.

Thus in a manner as described hereinabove in relation to the embodiment shown in Figures 12 and 13, in the Figure 14 embodiment the inner member 1" is operatively connected to the outer member 4" by means of the first and second bushings 2e" and 3e" respectively, and with the knurled portion of the wall 11″ engaging the wall 22″, whereby the inner member 1″ is retained both axially and rotatively relative to the outer member 4″.

**Claims**

1. A self-crimping connection for inner and outer members comprising:

an inner member (1) having a body portion (10) with one end thereof provided with a stepped-diameter cylindrical surface defining an external inboard wall (11) and an outboard wall (12) of reduced diameter relative to the inboard wall (11), with the body portion (10) and the inboard wall (11), and the inboard wall (11) and the outboard wall (12), of the inner member (1) being interconnected by means of first and second flat shoulders (14 and 15) respectively, and the inner member (1) having an annular groove (17) in the outboard wall (12);

an outer member (4) having a body portion (20) with a stepped bore in one end thereof defining a circular internal outboard wall (21) and an inboard wall (22) each of a diameter slidably receiving the inboard wall (11) and the outboard wall (12) respectively of the inner member (1), with the outboard wall (21) and the inboard wall (22) of the outer member (4) being interconnected by means of a flat shoulder (24), and the outboard wall (21) of the outer member (4) having an annular groove (25) therein, the outboard wall (21) of the outer member (4) defining with the outboard wall (12) of the inner member (1) between the second flat shoulder (15) of the inner member (1) and the flat shoulder (24) of the outer member (4) an annulus chamber when the first flat shoulder (14) of the inner member (1) is in abutment against the outer end surface (23) of the outer member (4); and

first and second bushings (2 and 3) positioned in the annulus chamber with the first bushing (2) having one end surface (37) thereof in abutment with the second flat shoulder (15) of the inner member (1) and its opposite end portions (32 to 35) extending into the annular groove (25) in the outboard wall (21) of the outer member (4), and the second bushing (3) having one end surface (37) thereof in abutment against the flat shoulder (24) of the outer member (4) and its opposite end portions (32 to 35) extending into the annular groove (17) in the inner member (1).

2. A self-crimping connection according to claim 1, characterised in that the first and second bushings (2 and 3) are each in the form of a split ring which in its as-formed shape prior to crimping includes a body portion (30) and a crimp collar portion (31) having circumferentially spaced-apart crimp portions (32) and cam surface means (33,34,35) such that on axial movement towards one another the crimp portions (32) of the respective bushings (2 and 3) are self-crimping.

3. A self-crimping connection according to claim 1, characterised in that the first bushing (2) includes a body portion (30) having one end surface (37) thereof in abutment with the second shoulder (15) of the inner member (1) and a crimp collar portion (31) having free end portions (32) thereof extending into the annular groove (25) in the outboard wall (21) of the outer member (4), and that the second bushing (3) includes a body portion (30) having a free end surface (37) thereof in abutment against the flat shoulder (24) of the outer member (4) and a crimp collar portion (31) having free end portions (32) thereof extending into the annular groove (17) in the inner member (1).

4. A method of assembling an inner member to an outer member by means of a self-crimping connection, in which the method comprises the steps of:

providing the inner member (1) with stepped external-diameter walls to thus define an annular outboard wall (12) and an inboard wall (11) of greater diameter that is connected to the outboard wall (12) by means of a first flat shoulder (15) and to a main body portion (10) of the inner member (1) by means of a second flat shoulder (14);

providing the outboard wall (12) of the inner member (1) with an annular groove (17) intermediate the ends thereof;

providing the outer member (4) with a stepped bore at one end thereof so as to define circular inboard and outboard walls (22 and 21) each of a diameter such as to slidably receive the outboard and inboard walls (12 and 11) respectively of the inner member (1), with the inboard and outboard walls (22 and 21) of the outer member (4) being interconnected by means of a flat shoulder (24);

placing a ring-like second bushing (3) having a body portion (30) and spaced-apart cam/crimp portions (33,34,35) integral with one end of the body portion (30) so as to extend circumferentially within the outboard wall (21) of the outer member (4) with the opposite end (37) of the body portion (30) of the second bushing (3) in abutment against the flat shoulder (24) of the outer member (4);

placing a ring-like first bushing (2) having a body portion (30) with spaced-apart cam/crimp portions (33,34,35) extending therefrom so as to encircle the outboard wall (12) of the inner member (1) with the opposite end (37) of the body portion (30) of the first bushing (2) in abutment against the first shoulder (15) of the inner member (1);

inserting the inner member (1) with the first bushing (2) into the outer member (4) until the cam/crimp portions (33,34,35) of the first bushing (2) engage the cam/crimp portions (33,34,35) of the second bushing (3); and

then axially moving the inner member (1) into the outer member (4) with a sufficient axial force for a portion of the cam/crimp portion (33,34,35) of the first bushing (2) to be crimped into locking engagement inside the annular groove (25) in the outer member (4) by the sliding engagement of the cam/crimp portions (33,34,35) of the first bushing (2) against the cam/crimp portions (33,34,35) of the second bushing (3), and for a portion of the cam/crimp portions (33,34,35) of the second bushing (3) to be crimped into locking engagement inside the annular groove (17) in the inner member (1) by the sliding engagement of the cam/crimp portions (33,34,35) of the second bushing (3) against the cam/crimp portions (33,34,35) of the first bushing (2).

Fig.1

Fig.2

Fig.3

Fig.4

Fig.5

Fig.6

Fig.7

Fig.8

Fig.9

Fig.10

Fig.11

*Fig.12*

*Fig.13*

*Fig.14*

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | DE-A-1 925 647 (INTERNATIONAL STANDARD ELECTRIC CORP.) * figures 2-4 * | 1 | F 16 B 17/00 |
| A | DE-A-3 440 991 (TEVES) * figures 2, 3 * | 1-4 | |
| A | DE-U-7 019 161 (SCOVILL MANUFACTURING CO.) * figures 1-3 * | 1 | |
| A | FR-A-2 270 473 (S.K.F.) * figures 2-3 * | 1-4 | |
| A | FR-A-2 580 341 (SOCIETE DE PARIS ET DU RHONE) * figures 2-3 * | 1,2 | |

TECHNICAL FIELDS SEARCHED (Int. Cl.4)

F 16 B 17/00
F 16 B 7/00
F 16 B 4/00
F 16 L 13/00

The present search report has been drawn up for all claims

| Place of search | Date of completion of the search | Examiner |
|---|---|---|
| BERLIN | 25-04-1988 | ZAPP E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document